# EUROPÄISCHE PATENTSCHRIFT

(11) **EP 0 903 283 B1**
(45) Veröffentlichungstag und Bekanntmachung des Hinweises auf die Patenterteilung: **30.05.2001**
(21) Anmeldenummer: 98116394.2
(22) Anmeldetag: 29.08.1998
(51) Int. Cl.: B62D 7/20, B62D 3/12

(54) **Einrichtung zur Verringerung des Lenkeinschlages bei einer Zahnstangenlenkung für Kraftfahrzeuge**
Device for reducing the maximum angle of a rack-and-pinion steering for motor vehicles
Dispositif de réduction de l'angle maximal d'une direction à crémaillère pour véhicules à moteur

(30) Priorität: 20.09.1997 DE 19741619
(43) Veröffentlichungstag der Anmeldung: 24.03.1999
(73) Patentinhaber: DaimlerChrysler AG, 70567 Stuttgart (DE)
(72) Erfinder: Jörg, Wolfgang, Dipl.-Ing., 70565 Stuttgart (DE); Möckel, Wolfgang, 70825 Korntal-Münchingen (DE)
(74) Vertreter: Patentanwalts-Partnerschaft Rotermund + Pfusch

(56) Entgegenhaltungen:
- EP-A- 0 470 424
- DE-A- 2 504 891
- DE-A- 2 902 053
- DE-A- 3 205 979
- DE-A- 19 523 568

## Beschreibung

Die Erfindung betrifft eine Einrichtung zur Verringerung des Lenkeinschlages bei Zahnstangenlenkungen für Kraftfahrzeuge.

Bei einem Serienfahrzeug ist die Lenkeinschlagsbegrenzung auf eine vorgegebene größte Serienbereifung ausgelegt. Bei einem Fahrzeug mit Frontantrieb werden dabei aufgezogene Schneeketten mit berücksichtigt. Um den Wendekreis eines Fahrzeuges klein zu halten, wird der Sicherheitsabstand bei voll eingeschlagener Lenkung möglichst gering gehalten.

Möchte ein Fahrzeughalter eine Bereifung einsetzen, bei der die Reifen breiter als das für die serienmäßige Lenkeinschlagsbegrenzung obere Maß sind, so ist eine Verringerung des maximalen Hubes der Zahnstangenlenkung notwendig.

Eine solche Hubveränderung kann durch eingebaute Verstelleinrichtungen erreicht werden. Solche Einrichtungen nach dem Oberbegriff des Anspruchs 1 sind aus der DE 3 205 979 A bekannt. Andere Verstelleinrichtungen, die jeweils einen komplizierten und damit kostenaufwendigen Aufbau besitzen, sind auch beispielsweise aus DE 39 00 937 A1 und EP 0 470 424 A1 bekannt.

Bekannt ist es auch, eine Hubverringerung einer Zahnstangenlenkung durch das Einbringen einer Distanzscheibe vorzunehmen. Die Distanzscheiben werden jeweils in die Verbindung zwischen Zahnstangenende und jeweils angrenzender Spurstange eingebracht. Dabei muß die Verbindung allerdings für das Einbringen der Distanzscheibe geöffnet werden. In diesem Fall muß daher die Spur der gelenkten Räder neu eingestellt und vermessen werden.

Die Erfindung beschäftigt sich mit dem Problem, eine Lenkeinschlagsreduzierung auf möglichst einfache und kostengünstige Art zu erreichen, bei der insbesondere eine Neueinstellung und Vermessung der Spur vermieden wird.

Eine Lösung für dieses Problem zeigt eine Ausgestaltung der gattungsgemäßen Einrichtung nach den kennzeichnenden Merkmalen des Patentanspruchs 1 auf.

Zweckmäßige Ausgestaltungen sind Gegenstand der Unteransprüche.

Ein Ausführungsbeispiel der Erfindung ist in der Zeichnung dargestellt.

Es zeigen
- Fig. 1: eine perspektivische Ansicht einer Zahnstangenverbindung mit einer Spurstange mit einer aufzusetzenden Distanzklemme,
- Fig. 2: den Gegenstand nach Fig. 1 mit aufgesetzter Distanz-klemme,
- Fig. 3: einen Schnitt nach Linie II-II in Fig. 2.

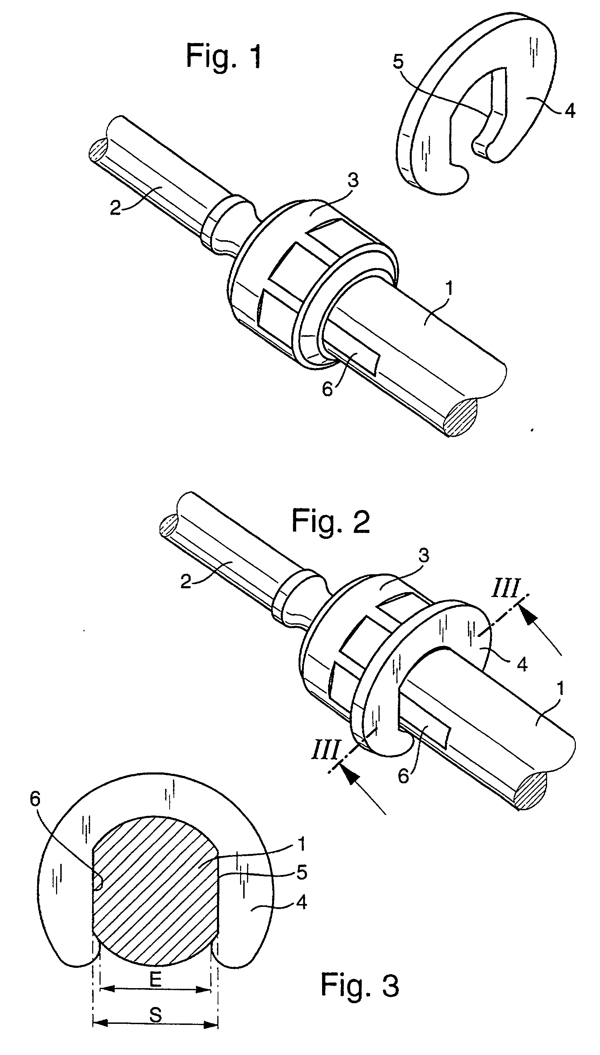

Eine Zahnstange 1 einer Zahnstangenlenkung ist an ihren beiden Enden jeweils mit einer jeweils einem zu lenkenden Rad zugeordneten Spurstange 2 verbunden. An den beiden Verbindungsstellen befindet sich jeweils ein Ringbund 3.

Die Zahnstange 1 ist in einem nicht dargestellten Gehäuse gelagert, das auch den Antrieb für die Zahnstange 1 enthält.

Die Lenkeinschlagsbegrenzung ist dadurch gegeben, daß in den Endstellungen jeweils ein Ringbund 3 an dem Gehäuse der Zahnstange 1 auf Anschlag anliegt.

Der maximale Lenkhub der Zahnstange 1 kann daher auf einfache Weise durch das Vorsehen einer Distanz-Klemme 4 an beiden Enden der Zahnstange 1 reduziert werden. Das Maß der Reduzierung wird durch die Dicke der eingesetzten Distanz-Klemmen 4 bestimmt.

Die einzusetzenden Distanz-Klemmen 4 besitzen eine U-Form, wodurch sie auf die Zahnstangenenden an den jeweiligen Ringbund 3 anschlagend aufsetzbar sind. Die Distanz-Klemmen 4 bestehen aus Federstahl.

Im Öffnungsbereich des U's der Distanz-Klemme 4 ist der Spaltbereich zwischen den U-Schenkeln in dem Randbereich eingeengt. In dem eingeengten Bereich ist nach der Zeichnung ein Spaltmaß E gegeben. Zum Inneren des U's hin schließt sich an den U-Schenkeln jeweils ein geradliniger Bereich 5 an, wobei diese Bereiche an den beiden U-Schenkeln parallel zueinander verlaufen. Die Spaltweite in dem von den geradlinigen Bereichen 5 gebildeten Abschnitt ist in der Zeichnung mit S angegeben und ist größer als die Spaltweite E.

Zur Aufnahme der geradlinigen Bereiche 5 der Schenkel der Distanz-Klemmen 4 sind an den Enden der zylindrisch ausgebildeten Zahnstange 1 komplementäre Abflachungen 6 vorgesehen. Durch die komplementäre Ausbildung der Abflachungen 6 zu den geradlinigen Bereichen 5 ist bei aufgesetzten Distanz-Klemmen 4 ein hinterschnittartiger Verschluß der Klemmen 4 auf der Zahnstange 1 gegeben.

Durch Kombination von verschieden dicken Distanz-Klemmen lassen sich auf sehr einfache Weise unterschiedliche Lenkeinschlagsbegrenzungen realisieren. Insbesondere ist nach einer erfindungsgemäßen Lenkeinschlagsveränderung keine Neueinstellung der Vorderachse mehr notwendig. Sämtliche Arbeiten zur Veränderung der Lenkeinschlagsbegrenzung können bei eingebautem Lenkgetriebe durchgeführt werden.

Die erfindungsgemäße Einrichtung zur Lenkeinschlagsbegrenzung ist auch für eine Serienfertigung gut geeignet, da sich an einem Grundlenkgetriebe sehr einfach verschiedene Hubvarianten erzielen lassen.

## Patentansprüche

1. Einrichtung zur Verringerung des Lenkeinschlages einer Zahnstangenlenkung für Kraftfahrzeuge mit einer zwischen den Spurstangen (2) der zu lenkenden Rädern liegenden und mit diesen Spurstangen (2) verbundenen, verschiebbar in einem Gehäuse gelagerten Zahnstange (1) mit radial verdickten Verbindungsbereichen (3) zwischen den Enden der Zahnstange (1) und der jeweils angelenkten Spurstange (2), bei der diese verdickten Bereiche die Lenkeinschlagsbegrenzung durch Anschlag an das Zahnstangen-Gehäuse bewirken, wobei diese Einrichtung aus mindestens zwei etwa U-förmigen Distanz-Klemmen (4) und Aufnahmebereichen (6) für jeweils eine dieser Klemmen in den an die radiale verdickung jeweils angrenzenden Bereichen der Zahnstange (1) besteht, wobei diese Aufnahmebereiche eine direkte Anlage einer der Klemmen (4) an der jeweiligen radialen Verdickung erlauben und bei der die U-Schenkel der Distanz-Klemmen (4) innerhalb der Klemmebene einen hinterschnittartig eingezogenen Öffnungsrandbereich bilden,
**dadurch gekennzeichnet,**
daß die Distanz-Klemmen (4) aus Federstahl bestehen und daß sich an den eingezogenen Öffnungsrandbereich zum geschlossenen U-Bereich der Distanz-Klemmen (4) hin an beiden Innenseiten der U-Schenkel in Aufsteckrichtung der Klemmen (4) parallel zueinander verlaufende Bereiche (5) anschließen, denen die Aufnahmebereiche (6) der Zahnstange (1) komplementär zugeordnet sind, wobei diese komplementären Aufnahmebereiche (6) jeweils bei aufgesteckter Klemme (4) von deren eingezogenem Öffnungsrandbereich in Aufsteckrichtung hinterschnittartig formschlüssig umschlossen werden.

## Claims

1. Device for reducing the maximum angle of a rack-and-pinion steering for motor vehicles with a steering rack (1) lying between the steering tie rods (2) of the wheels to be steered, connected with these steering tie rods (2) and moveably mounted in a casing, with radially thickened connection areas (3) between the ends of the steering rack (1) and respectively hinged steering tie rod (2), in which these thickened areas limit the steering motion by hitting the steering rack casing, wherein this device consists of at least two roughly U shaped spacer clamps (4) and respective receiving areas (6) for one of these clamps in the areas of the steering rack (1) adjacent to the radial thickening, wherein these receiving areas permit a direct abutment of one of the clamps (4) against the respective radial thickening, and in which the U-legs of the spacer clamps (4) form a back-cut retracted opening edge area inside the clamping plane, characterized by the fact that the spacer clamps (4) consist of spring steel, and that areas (5) running parallel toward one another on both internal sides of the U legs in the snap-on direction of the clamps (4) toward the retracted opening edge area to the closed U area of the spacer clamps (4), to which the receiving areas (6) of the steering rack (1) are complementarily allocated, wherein these complementary receiving areas (6) are enveloped with a positive fit with the clamp (4) snapped on in front of their retracted opening edge area in a back-cut manner in the snap-on direction.

## Revendications

1. Dispositif pour réduire l'angle de braquage d'une direction à crémaillère pour des véhicules automobiles, comportant une crémaillère (1) qui est disposée entre les barres d'accouplement (2) des roues orientables, est reliée à ces barres d'accouplement (2), est montée de manière à être déplaçable dans un carter et comporte des parties de liaison (3) épaissies radialement, situées entre les extrémités de la crémaillère (1) et de la barre d'accouplement respectivement articulée (2), et dans lequel ces parties épaissies réalisent une limitation du braquage par venue en butée contre le carter de la crémaillère, le dispositif étant constitué par au moins deux pinces-entretoises approximativement en forme de U (4) et par au moins deux zones de logement (6) pour respectivement l'une de ces pinces, dans les parties de la crémaillère (1), qui jouxtent respectivement l'épaississement radial, ces zones de logement permettant une application directe de l'une des pinces (4) sur l'épaississement radial respectif, tandis que les branches en forme de U des pinces-entretoises (4) forment, dans le plan de la pince, une partie marginale d'ouverture qui est rentrante avec une forme en contre-dépouille,
caractérisé en ce
que les pinces-entretoises (4) sont réalisées en un acier pour ressorts et qu'à la zone marginale d'ouverture en retrait se raccordent, en direction de la partie en forme de U fermée des pinces-entretoises (4), des parties (5) qui sont parallèles entre elles sur les deux côtés intérieurs des branches du U dans la direction d'enfichage des pinces (4) et auxquelles sont associées, d'une manière complémentaire, les zones en renfoncement (6) de la crémaillère (1), ces zones de logement complémentaires (6) étant entourées respectivement selon une liaison par formes complémentaires et avec une disposition en contre-dépouille dans la direction d'enfichage, par la partie marginale rentrante d'ouverture, lorsque la pince (4) est enfichée.
